# EUROPÄISCHE PATENTSCHRIFT

(11) **EP 1 351 036 B1**
(45) Veröffentlichungstag und Bekanntmachung des Hinweises auf die Patenterteilung: **16.03.2005**
(21) Anmeldenummer: 03007753.1
(22) Anmeldetag: 04.04.2003
(51) Int. Cl.: G01C 11/04, G06T 7/60

(54) **Photogrammetrisches Verfahren zur Ermittlung geometrischer Informationen aus Bildern**
Photogrammetric method of determining geometric information from images
Procédé photogrammétrique pour déterminer des données géométriques à partir d'images

(30) Priorität: 04.04.2002 DE 10214840
(43) Veröffentlichungstag der Anmeldung: 08.10.2003
(73) Patentinhaber: Braasch, Uwe, 38855 Wernigerode (DE); Feist, Michael, 38855 Wernigerode (DE)
(72) Erfinder: Braasch, Uwe, 38855 Wernigerode (DE); Feist, Michael, 38855 Wernigerode (DE)
(74) Vertreter: Einsel, Martin

(56) Entgegenhaltungen:
- US-A- 5 967 979
- PIZLO Z ET AL: "RECOGNITION OF PLANAR SHAPES FROM PERSPECTIVE IMAGES USING CONTOUR-BASED INVARIANTS" CVGIP IMAGE UNDERSTANDING, ACADEMIC PRESS, DULUTH, MA, US, Bd. 56, Nr. 3, 1. November 1992 (1992-11-01), Seiten 330-350, XP000382759 ISSN: 1049-9660

## Beschreibung

Die Erfindung betrifft ein photogrammetrisches Verfahren zur Ermittlung geometrischer Informationen aus Bildern von Objekten, die verzerrt sind.

Die Photogrammetrie dient zur Gewinnung geometrischer Informationen aus Bildern. Die Gewinnung solcher Informationen aus Bildern ist häufig erwünscht. So ist es mitunter schwierig oder gar nicht möglich, am Objekt selbst Messungen vorzunehmen. In anderen Fällen sind die auf den Bildern befindlichen Objekte, beispielsweise historische Bauten, gar nicht mehr existent, trotzdem soll aber eine Auswertung erfolgen, etwa zur Rekonstruktion. In wieder anderen Fällen wäre es zwar grundsätzlich möglich, eine Messung vorzunehmen, eine Auswertung bereits vorhandener Bilder wäre aber wesentlich kostengünstiger, und so fort.

Je nach den örtlichen Umständen ist eine orthogonale Aufnahme eines Objektes nicht möglich. Dabei ist insbesondere an Gebäudeaufnahmen zu denken, die aus dem Kamerastandort resultierende perspektivische Verzerrungen aufweisen. Die dem Aufnahmestandort näheren Bereiche sind naturgemäß stets größer auf den aufgenommenen Bildern als die weiter entfernten, gleichzeitig sind die Winkel verzerrt. Alle Aufnahmen, die nicht senkrecht zu einer Ebene bzw. gegenüber dem Mittelpunkt der Ebene aufgenommen werden, enthalten perspektivische Verzerrungen.

Zur photogrammetrischen Auswertung werden daher die stets in den Bildern enthaltenen perspektivischen Verzerrungen zunächst "entzerrt". Das "Entzerren" eines aufgenommenen Bildes erfolgt anhand von Messpunkten und anschließender Transformationen wie z.B. aus US-5967979 bekannt ist. Hierfür ist insbesondere die Affin- oder Helmert-Transformation zu nennen. Die Festlegung und Vermessung dieser Messpunkte erfordert einen hohen manuellen Aufwand, da eine höhere Anzahl von Messpunkten die Qualität der Auswertung steigert und daher entsprechend eine hohe Anzahl an Messpunkten angestrebt wird.

Diese Bearbeitung der Messpunkte und auch die anschließende Entzerrung selbst ist eine sehr aufwendige Prozesskette. Die bisher bekannten Verfahren, die eine solche Auswertung vornehmen und die dazu benötigten Hilfsmittel sind sehr kostspielig, wobei gleichzeitig die Handhabung sehr kompliziert und aufwendig ist. Sie kann nur von Fachleuten vorgenommen werden, die darüber hinaus auch entsprechend Zeit für die Durchführung der Verfahren benötigen. Beispiele für solche Verfahren sind beispielsweise von U. Weferling, K. Heine und U. Wulf in "Vom Handaufmaß bis High-Tech", Verlag Philipp von Zabern, Mainz, 2001, zusammengestellt worden.

Die aktuellen photogrammetrischen Systeme sind sehr kostenintensiv und erfordern einen hohen Bedienaufwand. Darüber hinaus ist ihr Einsatzgebiet sehr eingeschränkt.

Aufgabe der Erfindung ist es demgegenüber, ein einfacheres Verfahren vorzuschlagen.

Diese Aufgabe wird durch ein Verfahren gelöst, bei dem in dem verzerrten Bild ein Kalibrierungsrechteck markiert wird, bei dem zwei Seiten des Kalibrierungsrechteckes je ein bekannter Wert zugeordnet wird, bei dem anhand des Kalibrierungsrechteckes und dieser Angaben die Fluchtpunkte und für die Ebene des Kalibrierungsrechteckes ein lokales Koordinatensystem bestimmt wird, bei dem ein Bildpunkt mit gesuchten geometrischen Informationen im verzerrten Bild markiert wird, bei dem im Kalibrierungsrechteck mit Hilfe der Diagonalen der Mittelpunkt und die Seitenmittelpunkte ermittelt werden, bei dem überprüft wird, ob der gesuchte Bildpunkt innerhalb des Kalibrierungsrechteckes angeordnet ist, und falls ja, innerhalb welches der vier von den Seitenmittelpunkten und dem Mittelpunkt aufgespannten Teilrechtecke, und falls nein, in Richtung welches der dem Kalibrierungsrechteck benachbarten Rechtecke, bei dem dann iterativ das Teilrechteck bzw. das benachbarte Rechteck zum neuen Kalibrierungsrechteck wird und die vorgenannten Schritte erneut durchgeführt werden, bis ein vorgegebener Schwellenwert oder eine vorgegebene Zahl an Iterationen erreicht wird, bei dem diese Werte dann in Bezug zu den bekannten Werten gesetzt werden.

Mit Hilfe dieses Verfahrens gelingt überraschend die deutlich vereinfachte Gewinnung geometrischer Informationen aus Bildern, und zwar trotz perspektivischer und anderer Verzerrungen.

Von dem abgebildeten Objekt werden zwei bekannte Werte (Messwerte) ermittelt. Dies werden vorteilhafterweise die Breite und die Höhe eines sichtbaren Rechteckes sein, die ganz konkret gemessen werden. Denkbar ist aber auch die Verwendung geometrischer Strecken oder auch die Verwendung anderer bekannter Werte, die nicht durch Messung, sondern durch Berechnung, etwa aus historischen Angaben, erhalten werden.

Bekannte Werte können auch aus Vergleichsobjekten abgeleitet werden, die ebenfalls auf den verzerrten Bildern an geeigneter Stelle abgebildet sind, beispielsweise Menschen, Autos, Pflanzen, etc. Häufig befinden sich in dem interessierenden Bild auch Elemente mit einem Rhythmus mit bekannten Abmessungen, etwa ein Mauerwerk, Fliesen, Dachpfannen, Pflaster usw.

Die Abbildung des Objektes wird mit ihrer insbesondere perspektivischen Verzerrung durch das Nachzeichnen des Rechteckes und die Eingabe der beiden vorgenannten bekannten Werte (Messwerte) kalibriert. Das danach folgende Verfahren basiert auf einer analytisch-geometrischen Iteration. Die Iteration setzt die wiederholte Teilung verzerrter Rechtecke in vier gleichgroße Teilrechtecke ein. Die Teilrechtecke werden über die Fluchtpunkte zum Rechteckmittelpunkt ermittelt. Die Mitte des verzerrten Rechtecks wird aus dem Schnittpunkt der Rechteckdiagonalen bestimmt. Mit Hilfe dieses Verfahrens werden geometrische Informationen direkt aus der insbesondere perspektivisch verzerrten Abbildung ermittelt. Die bisher notwendige, aufwendige, zeitraubende und kostenintensive Bildentzerrung kann vollständig entfallen.

Auch andere als perspektivische Verzerrungen werden vom erfindungsgemäßen Verfahren einwandfrei bearbeitet. So enthalten freihändige Fotos eine Vielzahl unbekannter Maßstäbe, was auch für Scans von Papierunterlagen mit unbekanntem Maßstab gilt.

Außerdem verzieht sich Papier in Abhängigkeit von der Sorte und der Lagerung ungleichmäßig in seiner X- und auch Y-Richtung. Auch solche Verzerrungen können die erfindungsgemäß durchgeführte Ermittlung der geometrischen Informationen nicht beeinträchtigen.

Das Verfahren ist für digitale Anwendungen besonders gut geeignet. So können einfach und schnell geometrische Informationen, wie Koordinaten, Längen und Flächen, aus digitalen Bildern gewonnen werden, diese also besonders effektiv ausgewertet werden.

Darüber hinaus ist das Verfahren so einfach, dass es auch durch Nicht-Fachleute nutzbar ist, also deutlich erweiterte Anwenderkreise finden kann. Dies wird dadurch unterstützt, dass es wesentlich kostengünstiger vorgenommen werden kann. Schließlich ist die Durchführung des Verfahrens auch für den Benutzer nachvollziehbarer, die Ergebnisse sind für ihn also sehr viel leichter überprüfbar.

Das Ermitteln von Maßen aus Bildern verkürzt auch erheblich die Arbeitszeit, die sonst vor Ort investiert werden müsste. Selbst dann, wenn also theoretisch am Objekt die erforderlichen Messungen vorgenommen werden könnten, ist der Einsatz des Verfahrens sehr wirtschaftlich.

Mit dem Verfahren können beispielsweise Bilder aus Digitalkameras ohne jede Bearbeitung direkt maßlich ausgewertet werden. Die Kalibrierung des Bildes durch nur zwei Messwerte vereinfacht den Bearbeitungsprozess erheblich. Der Arbeitsschritt der Bildentzerrung entfällt komplett. Die Arbeit mit den nicht entzerrten Bildern entspricht auch mehr den Sehgewohnheiten der Anwender.

Das erfindungsgemäße Verfahren eignet sich nicht nur für Bilder aus Digitalkameras, sondern ist auch für gescannte und auf andere Weise digitalisierte Vorlagen mit Nutzen anzuwenden. Es können mit dem Verfahren auch Vorlagen auf Papier ausgewertet werden. Darstellungen, die aus Vektoren bestehen und perspektivische Verzerrungen aufweisen, können mit Hilfe des Verfahrens entzerrt werden.

Im Folgenden wird anhand der Zeichnung ein Ausführungsbeispiel des erfindungsgemäßen Verfahrens anhand mehrerer Schritte in den Figuren erläutert.
- **Figur 1**: zeigt eine perspektivisch verzerrte Aufnahme einer Gebäudefassade, wie sie von einem Original angefertigt sein kann;
- **Figur 2**: zeigt die Gebäudefassade aus Figur 1 mit gekennzeichneten Maßen für die Breite und Höhe der Fassade;
- **Figur 3**: zeigt die Gebäudefassade aus Figur 2 mit eingezeichnetem Kalibrierungsrechteck;
- **Figur 4**: zeigt die Gebäudefassade aus Figur 3 mit eingezeichneten Maßen für das Kalibrierungsrechteck;
- **Figur 5**: zeigt die Gebäudefassade mit angedeuteten Fluchtpunkten;
- **Figur 6**: zeigt die Gebäudefassade aus Figur 1 mit lokalem Koordinatensystem;
- **Figur 7**: zeigt die Gebäudefassade aus Figur 1 mit zu ermittelndem Bildpunkt;
- **Figur 8**: zeigt die Gebäudefassade aus Figur 1 mit Diagonalen im Kalibrierungsrechteck;
- **Figur 9**: zeigt die Gebäudefassade aus Figur 8 mit Bezugslinien zu den Fluchtpunkten;
- **Figur 10**: zeigt die Gebäudefassade aus Figur 9 mit Einteilung des Kalibrierungsrechteckes in neue Rechtecke;
- **Figur 11**: zeigt die Gebäudefassade aus Figur 10 mit aktualisiertem Rechteck;
- **Figur 12**: zeigt die Gebäudefassade aus Figur 11 mit neuem Teilrechteck; und
- **Figur 13**: zeigt die Gebäudefassade aus Figur 1 bei der Suche nach einem Bildpunkt außerhalb des Kalibrierungsrechteckes.

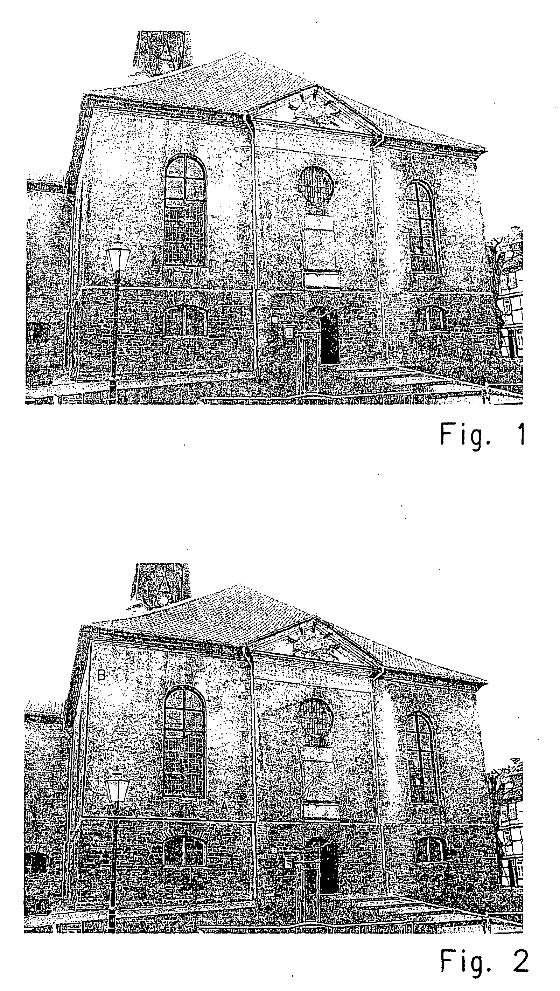

In **Figur 1** ist eine Gebäudefassade abgebildet, wie sie beispielsweise in digitaler Form aufgenommen sein kann. Wie leicht zu erkennen ist, ist die Gebäudefassade perspektivisch verzerrt aufgenommen, der Betrachter steht der linken Seite des Gebäudes näher als der rechten und befindet sich darüber hinaus in üblicher Stehhöhe über dem Erdboden, also der Eingangstür in der Gebäudefassade näher als dem Dach.

Wie **Figur 2** andeutet, werden vor Ort noch die beiden eingezeichneten Maße der Fassade ermittelt, hier also beispielsweise Breite und Höhe. Es können auch andere Maße verwendet werden. Bei nicht mehr existenten Gebäuden, von denen nur noch Fotos existieren, ist aber gleichwohl sehr häufig zumindest eine Angabe von zwei derartigen grundsätzlichen Werten bekannt, die dann ebenfalls zur Kalibrierung verwendet werden können. Es handelt sich also um Messwerte oder aus anderen Gründen bekannte Werte.

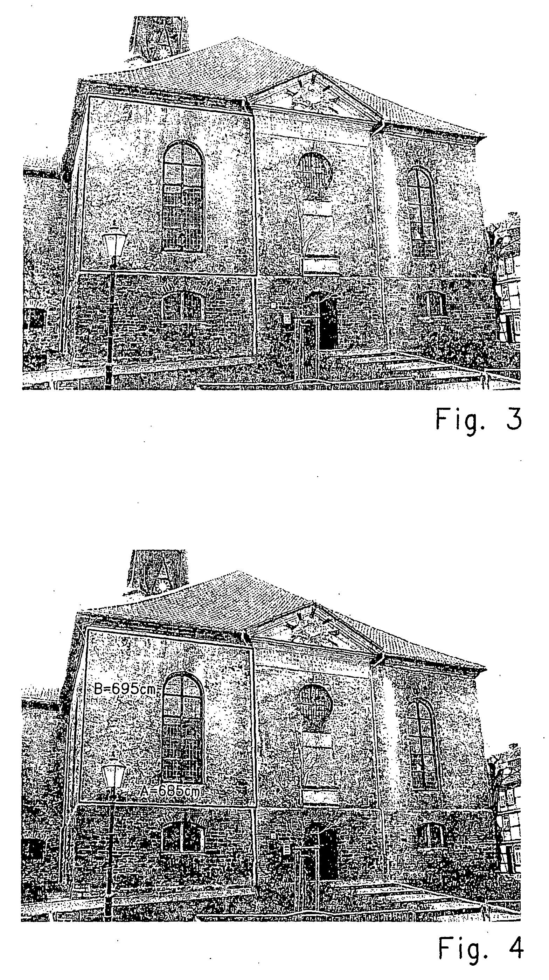

Das Foto wird nunmehr digitalisiert, sofern es nicht ohnehin schon ein Digitalfoto ist. Nach dieser Digitalisierung erfolgt nunmehr die Kalibrierung des Bildes, das zu diesem Zweck zweckmäßigerweise auf einem Bildschirm wiedergegeben wird. Dazu markiert, wie in **Figur 3** eingezeichnet, der Anwender die vier Eckpunkte des an der Fassade ermittelten Kalibrierungsrechteckes, ungeachtet jeder perspektivischen Verzerrung.

Wie in **Figur 4** angedeutet, werden nunmehr die zuvor an der Fassade oder auf andere Weise ermittelten Maße für das Kalibrierungsrechteck entsprechend eingegeben und zugeordnet.

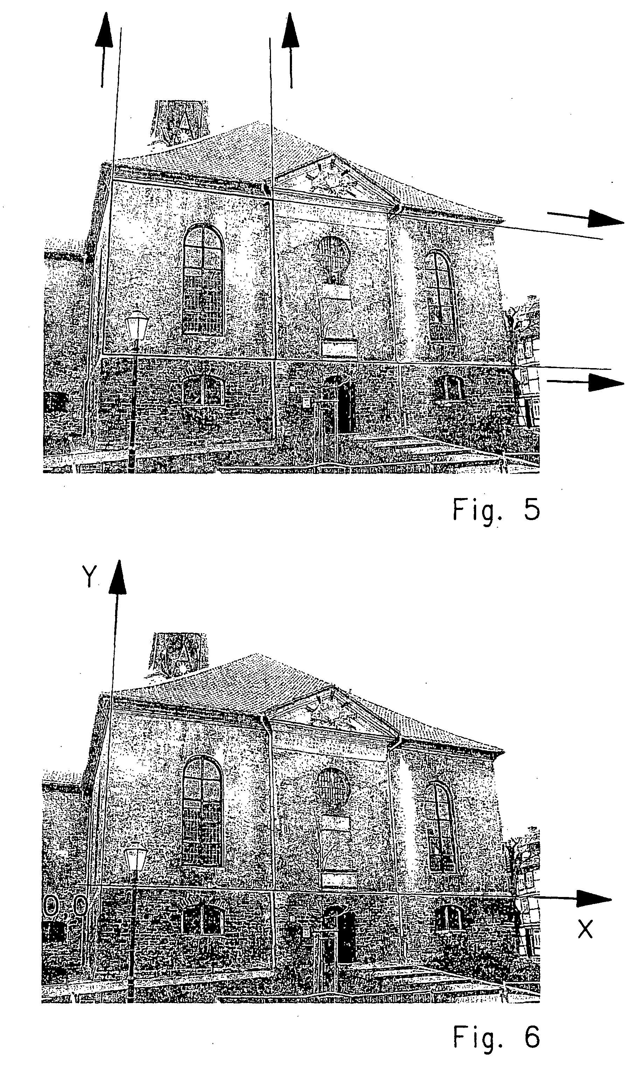

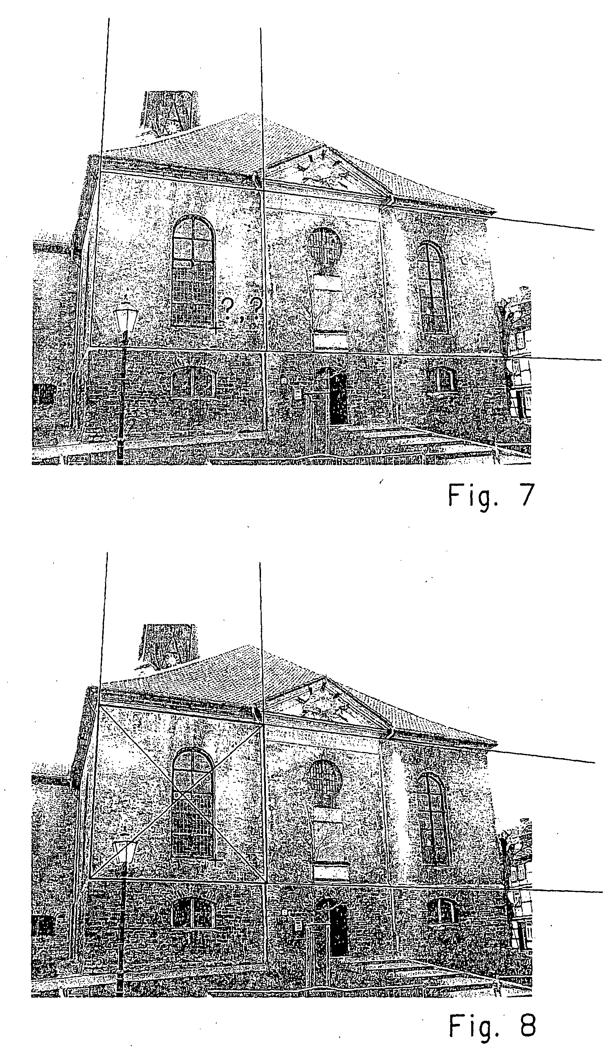

Nunmehr werden anhand des Kalibrierungsrechteckes, wie in **Figur 5** angedeutet, die Fluchtpunkte ermittelt, also jeweils für zwei Richtungen. Zugleich wird für die Ebene des Kalibrierungsrechteckes ein lokales Koordinatensystem festgelegt, wie in **Figur 6** angedeutet.

Das Verfahren dient nun dazu, die Koordinaten eines beliebigen Bildpunktes innerhalb dieser kalibrierten Ebene festzustellen, also beispielsweise die Entfernung eines bestimmten Punktes von der Kante des Gebäudes oder auch andere zweidimensionale Koordinaten. In dem in **Figur 7** angedeuteten Beispiel interessiert jetzt fiktiv, wo genau in der Gebäudefassade eigentlich der rechte untere Eckpunkt eines Bogenfensters liegt. Es könnte ja im Fall einer Rekonstruktion erforderlich werden festzustellen, in welcher Höhe über dem Erdboden das Bogenfenster beginnt oder wie weit es von der Seite des Gebäudes entfernt ist. Ebenso könnte es wichtig werden zu wissen, wie groß eine Glasfläche sein muss, die im Falle einer Reparatur beschafft werden muss, usw.

Bei einem digitalisierten Bild kann der Benutzer den ihn gerade interessierenden Bildpunkt etwa mittels Mausklick kennzeichnen.

Nachdem nun zunächst festgelegt ist, welcher Bildpunkt eigentlich bestimmt werden soll, beginnt ein iterativer Verfahrensabschnitt. Dieser beginnt in **Figur 8**. Zunächst wird innerhalb des verzerrten, also nicht entzerrten Rechteckes mit Hilfe der beiden Diagonalen der Mittelpunkt bestimmt. Zu beachten ist natürlich, dass aufgrund der Verzerrung das Rechteck keine rechten Winkel besitzt, wohl aber lassen sich zwischen den gegenüberliegenden Eckpunkten Diagonalen aufspannen.

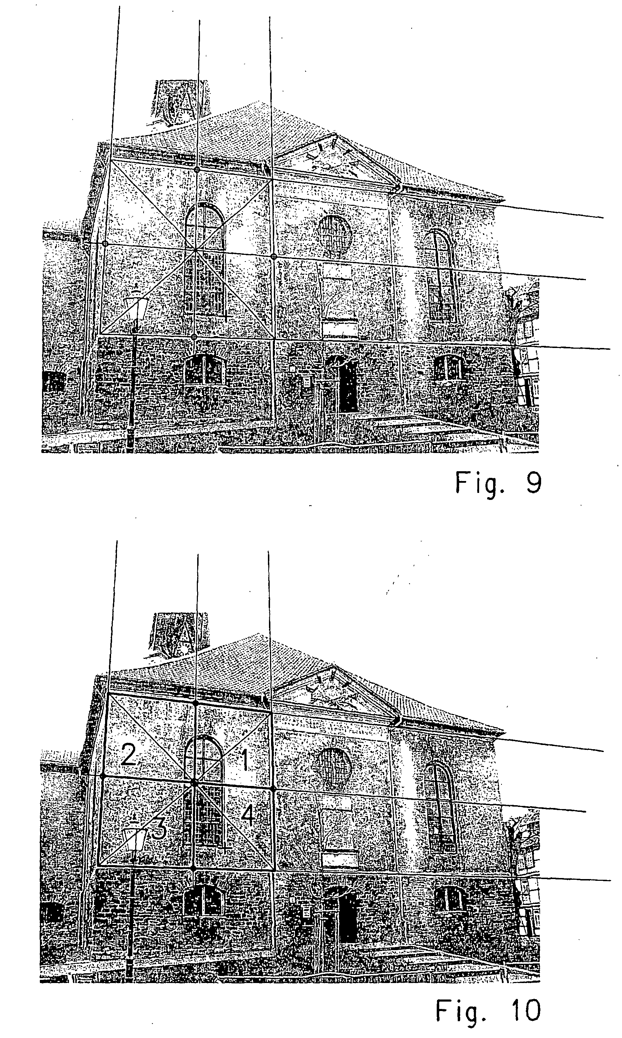

Wie in **Figur 9** zu erkennen ist, werden nunmehr aus diesem ermittelten Mittelpunkt Verbindungen zu den Fluchtpunkten gebildet, siehe oben in Figur 5. Diese Verbindungen von dem Mittelpunkt zu den Fluchtpunkten schneiden entsprechend die Seiten des nicht entzerrten, aktuellen Rechteckes, so dass sich so die Seitenmittelpunkte ergeben. **Figur 10** zeigt, dass im nächsten Schritt die so ermittelten Seitenmittelpunkte zusammen mit dem Schnittpunkt der beiden Diagonalen vier neue Rechtecke ergeben, die zusammen das ursprüngliche Rechteck bilden.

Im nächsten Schritt wird überprüft, in welchem dieser vier neuen Rechtecke nun der eigentlich gesuchte Bildpunkt liegt. In dem gewählten Beispielsfall ist dies das rechte untere, in der Figur 10 mit der Zahl 4 gekennzeichnete Rechteck.

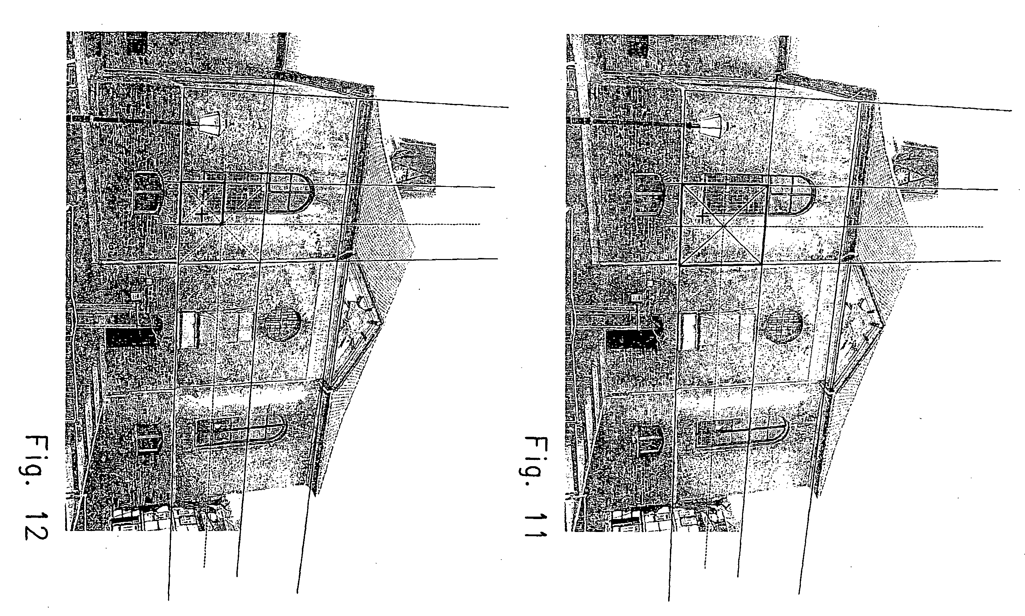

Dieses rechte untere Rechteck wird nun in **Figur 11** wieder zum neuen, aktuellen Rechteck deklariert. Dann beginnt das iterative Verfahren erneut mit diesem Rechteck. Es wird also wiederum ein Mittelpunkt bestimmt, daraus die Seitenmittelpunkte, usw.

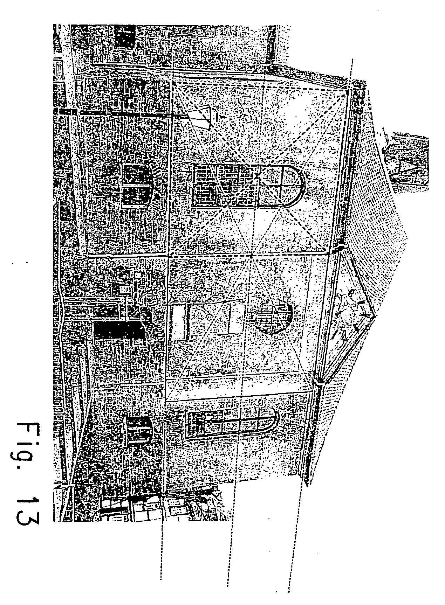

In **Figur 12** ist jetzt zu erkennen, wie mit diesem neuen Teilrechteck weiter fortgefahren wird.

Diese iterativen Schritte gemäß den Darstellungen in den Figuren 8 bis 12 werden solange durchgeführt, bis ein entsprechendes Abbruchkriterium die Iteration beendet. Dieses Abbruchkriterium wird zuvor anhand der gewünschten Genauigkeit der Koordinatenangabe ausgewählt. Es hat sich herausgestellt, dass im Regelfall acht Iterationsdurchläufe genügen, um ein gewünschtes Ergebnis zu erzielen.

Die Daten der jeweils ausgewählten Rechtecke sind ohne weiteres den lokalen Koordinaten zuzuordnen, so dass sich genau diese damit mit der gewählten Genauigkeit sofort ermitteln lassen.

Hierzu kann beispielsweise während des Verfahrens jede getroffene Entscheidung gespeichert und anhand dieser Informationen dann am Ende im lokalen Koordinatensystem des Kalibrierungsrechteckes die Ergebnisinformation ausgeworfen werden.

Das Verfahren arbeitet auch dann, wenn der gesuchte Bildpunkt außerhalb des Kalibrierungsrechteckes liegt, was ja ohne weiteres der Fall sein kann. **Figur 13** deutet dies an. Es werden dann die neben dem Kalibrierungsrechteck liegenden Rechtecke über die Seitenmittelpunkte des Kalibrierungsrechteckes konstruiert, solange, bis der gesuchte Punkt innerhalb eines solchen Erweiterungsrechtecks liegt. In diesem Rechteck wird dann die beschriebene Iteration durchgeführt.

In der **Figur 13** wird angenommen, das Kalibrierungsrechteck sei der angegebene Bereich innerhalb des Bogenfensters, so dass daraus dann auch Bereiche links neben dem Bogenfenster entsprechend erfasst werden können. Es wäre auf diese Weise auch möglich, aus der Größe und den Kalibrierungsdaten des Bogenfensters auf die Entfernung eines beliebigen Gebäudepunktes von der linken Gebäudekante zu schließen.

## Patentansprüche

1. Verfahren zur Ermittlung geometrischer Informationen aus Bildern von Objekten, die verzerrt sind,
- bei dem in dem verzerrten Bild ein Kalibrierungsrechteck markiert wird,
- bei dem zwei Seiten des Kalibrierungsrechteckes je ein bekannter Wert zugeordnet wird,
- bei dem anhand des Kalibrierungsrechteckes und dieser Angaben die Fluchtpunkte und für die Ebene des Kalibrierungsrechteckes ein lokales Koordinatensystem bestimmt wird,
- bei dem ein Bildpunkt mit gesuchten geometrischen Informationen im verzerrten Bild markiert wird,
- bei dem im Kalibrierungsrechteck mit Hilfe der Diagonalen der Mittelpunkt und die Seitenmittelpunkte ermittelt werden,
- bei dem überprüft wird, ob der gesuchte Bildpunkt innerhalb des Kalibrierungsrechteckes angeordnet ist, und falls ja, innerhalb welches der vier von den Seitenmittelpunkten und dem Mittelpunkt aufgespannten Teilrechtecke, und falls nein, in welchem der dem Kalibrierungsrechteck benachbarten und über die Seitenmittelpunkten konstruierten Rechtecke,
- bei dem dann iterativ das Teilrechteck bzw. das benachbarte Rechteck zum neuen Kalibrierungsrechteck wird und die vorgenannten Schritte erneut durchgeführt werden, bis ein vorgegebener Schwellenwert oder eine vorgegebene Zahl an Iterationen erreicht wird,
- bei dem das ausgewählte Rechteck dann in Bezug zu den bekannten Werten gesetzt wird.

2. Verfahren nach Anspruch 1,
**dadurch gekennzeichnet,**
**dass** die Bilder der Objekte zunächst digitalisiert werden.

3. Verfahren nach Anspruch 1 oder Anspruch 2,
**dadurch gekennzeichnet,**
**dass** die beiden bekannten Werte, die den zwei Seiten des Kalibrierungsrechteckes zugeordnet werden, die Breite und die Höhe in entsprechenden realen Streckenlängenwerten sind.

## Claims

1. Method of determining geometric information from images of articles, which are distorted,
- whereby in the distorted image a calibration rectangle is marked,
- whereby a known value is assigned to each of two sides of the calibration rectangle,
- whereby with the aid of the calibration rectangle and said data the vanishing points and, for the plane of the calibration rectangle, a local coordinate system is determined,
- whereby an image element with required geometric information is marked in the distorted image,
- whereby in the calibration rectangle with the aid of the diagonal the centre and the centres of the sides are determined,
- whereby it is checked whether the required image element is disposed inside the calibration rectangle and, if so, inside which of the four sub-rectangles defined by the centres of the sides and the centre and, if not, in which of the rectangles adjacent to the calibration rectangle and constructed by means of the centres of the sides,
- whereby then iteratively the sub-rectangle and/or the adjacent rectangle becomes the new calibration rectangle and the previously described steps are repeated until a preset threshold value or a preset number of iterations is reached,
- whereby the selected rectangle is then set in relation to the known values.

2. Method according to claim 1,
**characterized in**
**that** the images of the articles are first digitized.

3. Method according to claim 1 or claim 2,
**characterized in**
**that** the two known values, which are assigned to the two sides of the calibration rectangle, are the width and the height in suitable real line length values.

## Revendications

1. Procédé de détection d'informations géométriques à partir de photos d'objets qui sont déformées,
- dans lequel un rectangle de calibrage est marqué sur la photo déformée
- dans lequel une valeur connue est affectée à chacun des deux côtés du rectangle de calibrage,
- dans lequel, à l'aide du rectangle de calibrage et de ces indications, les points d'alignement et un système de coordonnées local pour le plan du rectangle de calibrage sont déterminés,
- dans lequel un point d'image avec des informations géométriques recherchées est marqué sur la photo déformée,
- dans lequel le point central et les points centraux latéraux sont déterminés dans le rectangle de calibrage à l'aide des diagonales,
- dans lequel on vérifie si le point d'image recherché est disposé à l'intérieur du rectangle de calibrage et, si oui, à l'intérieur duquel des quatre rectangles partiels formés par les points centraux latéraux et par le point central et, si non, dans lequel des rectangles voisins du rectangle de calibrage et construit via les points centraux latéraux,
- dans lequel ensuite, par itération, le rectangle partiel et/ou le rectangle voisin deviennent le nouveau rectangle de calibrage et les étapes susmentionnées sont à nouveau effectuées, jùsqu'à ce qu'une valeur de seuil prescrite ou un chiffre prescrit d'itérations soient atteints,
- dans lequel le rectangle sélectionné est ensuite mis en relation avec les valeurs connues.

2. Procédé selon la revendication 1, **caractérisé en ce que** les photos de l'objet sont d'abord numérisées.

3. Procédé selon la revendication 1 ou 2, **caractérisé en ce que** les deux valeurs connues qui sont affectées aux deux côtés du rectangle de calibrage sont la largeur et la hauteur dans des valeurs de segments réelles correspondantes.
